# EUROPEAN PATENT APPLICATION

(11) **EP 3 435 293 A1**
(43) Date of publication of application: **30.01.2019**
(21) Application number: 17795880.8
(22) Date of filing: 11.04.2017
(51) Int. Cl.: G06N 3/00

(54) **STORAGE CONTROL SYSTEM, SYSTEM, AND PROGRAM**

(30) Priority: 13.05.2016 JP 2016096836
(71) Applicant: Cocoro SB Corp., Tokyo 105-7309 (JP)
(72) Inventor: SON Masayoshi, Tokyo 105-7309 (JP); TSUTSUI Takashi, Tokyo 105-7309 (JP); TOMONAGA Kosuke, Tokyo 105-7309 (JP); OURA Kiyoshi, Tokyo 105-7309 (JP)
(74) Representative: Michalski Hüttermann & Partner Patentanwälte mbB
(86) International application number: PCT/JP2017/014875
(87) International publication number: WO 2017/195519

(57) **Abstract**

A memory control system includes: an information acquiring unit that acquires information for deciding an emotion of a target object; a secretion information generating unit that generates secretion information indicating a secretion amount of an endocrine substance to influence decision of the emotion of the target object, based on the information acquired by the information acquiring unit; a memory control unit that associates and stores the secretion information and memory information based on the information acquired by the information acquiring unit, when an intensity of the emotion of the target object decided based on the information acquired by the information acquiring unit exceeds a predetermined value; and an information selecting unit that selects memory information to be retrieved by the target object from the memory information that has been stored in association with the secretion information, based on the secretion information.

## Description

### BACKGROUND

### 1. TECHNICAL FIELD

The present invention relates to a memory control system, system and program.

### 2. RELATED ART

A terminal that studies conversations between a user and another person that the user is talking to on the phone and accumulates, in a reply table, replies from the other person on the phone to questions from the user has been known (please see Patent Document 1, for example). In addition, an emotion generating apparatus including a neural network that receives an input of user information, equipment information and a current emotional state of a user him/herself to output a next emotional state has been known (please see Patent Document 2, for example). In addition, a technique to store spatiotemporal patterns in an associative memory including a plurality of electronic neurons having a layer neural network relation having directive artificial synapse connectivity has been known (please see Patent Document 3, for example).

### [Prior Art Documents]

### [Patent Documents]

[Patent Document 1] Japanese Patent Application Publication No. 2011-253389
[Patent Document 2] Japanese Patent Application Publication No. H10-254592
[Patent Document 3] Japanese Translation of PCT International Patent Application No. 2013-535067

### SUMMARY

Conventionally, there has been a drawback that only information uniformly determined from input information can be taken out from the stored information.

A first aspect of the present invention provides a memory control system. The memory control system may include an information acquiring unit that acquires information for deciding an emotion of a target object. The memory control system may include a secretion information generating unit that generates secretion information indicating a secretion amount of an endocrine substance to influence decision of the emotion of the target object, based on the information acquired by the information acquiring unit. The memory control system may include a memory control unit that associates and stores the secretion information and memory information based on the information acquired by the information acquiring unit, when an intensity of the emotion of the target object decided based on the information acquired by the information acquiring unit exceeds a predetermined value. The memory control system may include an information selecting unit that selects memory information to be retrieved by the target object from the memory information that has been stored in association with the secretion information, based on the secretion information.

When the intensity of the emotion of the target object decided based on the first information acquired by the information acquiring unit exceeds a predetermined value, the memory control unit may associate and store first memory information based on the first information, a set of second memory information based on the second information acquired by the information acquiring unit before the first information and the first memory information, and the secretion information. When the information acquiring unit acquires new information conforming to the second memory information, on condition that the secretion information generated by the secretion information generating unit conforms to the secretion information stored in association with a set of the second memory information and the first memory information, the information selecting unit may select the first memory information and a set of the second memory information and the first memory information, as memory information to be retrieved by the target object.

When the first memory information is selected by the information selecting unit, on condition that the information acquiring unit further acquires new information conforming to the first memory information, the memory control unit may associate and store the secretion information with an increased secretion amount of an endocrine substance with an influence of suppressing undulation of the emotion, and a set of the second memory information and the first memory information.

When the first memory information is selected by the information selecting unit, on condition that the information acquiring unit further acquires new information conforming to the first memory information, the secretion information generating unit may make the secretion information that indicates a secretion amount of an endocrine substance at present reflect an secretion amount of an endocrine substance indicated by the secretion information stored in association with a set of the second memory information and the first memory information.

When the intensity of the emotion of the target object decided based on the first information acquired by the information acquiring unit exceeds a predetermined value, the memory control unit may associate and store first memory information based on the first information, a set of each of any combination of a plurality of second memory information based on a plurality of the second information acquired by the information acquiring unit before the first information and the first memory information, and the secretion information. When the information acquiring unit acquires new information conforming to the first combination of a plurality of the second memory information, on condition that the secretion information generated by the secretion information generating unit conforms to the secretion information stored in association with a set of the first combination of a plurality of the second memory information and the first memory information, the information selecting unit may select the first memory information and a set of the first combination of a plurality of the second memory information and the first memory information, as memory information to be retrieved by the target object.

When the intensity of the emotion of the target object decided based on the first information acquired by the information acquiring unit exceeds a predetermined value, the memory control unit may associate and store the first memory information, a set of each of any combination of a plurality of the second memory information and a sequence of the first memory information and third memory information based on third information acquired by the information acquiring unit following the first information, and the secretion information. When the information acquiring unit acquires new information conforming to the first combination of a plurality of the second memory information, on condition that the secretion information generated by the secretion information generating unit conforms to the secretion information stored in association with a set of the first combination of a plurality of the second memory information and a sequence of the first memory information and the third memory information, the information selecting unit may select the first memory information and a set of the first combination of a plurality of the second memory information and a sequence of the first memory information and the third memory information, as memory information to be retrieved by the target object.

The memory control system may include a permission information storage unit that stores one or more memory information that is(are) permitted to be selected as information to be retrieved by the target object, when, in association with one or more determination information, information conforming to the one or more determination information is(are) acquired. When the information acquiring unit acquires information conforming to the determination information stored in the permission information storage unit in association with a set of the second memory information and the first memory information, and information conforming to the second memory information within a predetermined length of time, the information selecting unit may select the first memory information as memory information to be retrieved by the target object.

When the first memory information is selected by the information selecting unit, when the information acquiring unit acquires new information denying the first memory information, the secretion information generating unit may make the secretion information stored in association with a set of the second memory information and third memory information based on the new information reflect an endocrine substance of a secretion amount with an influence contrary to an influence by an endocrine substance of a secretion amount indicated by the secretion information stored in association with a set of the second memory information and the first memory information.

When the first memory information is selected by the information selecting unit, when the information acquiring unit acquires new information denying the first memory information, the secretion information generating unit may make the secretion information stored in association with a set of the second memory information and third memory information based on the new information reflect an endocrine substance of a secretion amount with an influence contrary to an influence by an endocrine substance of a secretion amount indicated by the secretion information stored in association with a set of the second memory information and the first memory information, and make the secretion information that indicates a secretion amount of an endocrine substance at present reflect the secretion information stored in association with a set of the second memory information and the third memory information, the secretion information reflects an endocrine substance of a secretion amount with the contrary influence.

The memory control system may include an emotion deciding unit that decides an emotion of the target object, based on a secretion amount of an endocrine substance indicated by the secretion information and the information acquired by the information acquiring unit.

The emotion deciding unit may decide the emotion of the target object by using a neural network that uses input information based on the information acquired by the information acquiring unit as input.

A secretion amount of an endocrine substance indicated by the secretion information may influence coupling coefficients of artificial synapses included in the neural network.

The neural network may include a plurality of emotion artificial neurons for which emotions are determined. The emotion deciding unit may decide a current emotion of the target object, based on current firing state of each of the plurality of emotion artificial neurons.

The memory control system may include a control unit that controls the target object, according to the emotion of the target object decided based on the information acquired by the information acquiring unit.

A second aspect of the present invention provides a system. The system may include the above-mentioned memory control system. The system may include the target object.

A third aspect of the present invention provides a program for causing a computer to function as the above-mentioned memory control system.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows one example of an overall configuration of a system 10 according to the present embodiment.
Fig. 2 schematically shows a functional block configuration of a robot 40 and a server 60.
Fig. 3 schematically shows an emotion map 300.
Fig. 4 schematically shows a part of a neural network used by a system 10.
Fig. 5 is one example of sensor correspondence information in which storage battery remaining capacities and endocrine substances are associated with each other.
Fig. 6 is one example of coupling coefficient correspondence information in which secretion amounts of noradrenalin and coupling coefficients BS are associated with each other.
Fig. 7 schematically shows temporal changes in the degree of excitement in the robot 40.
Fig. 8 schematically shows one example of temporal change in memory intensity of memory information stored in a storage unit 280.
Fig. 9 schematically shows another example of temporal change in memory intensity of memory information stored in a storage unit 280.
Fig. 10 is a figure for explaining an acquisition sequence of attached memory information attached to memory information.
Fig. 11 shows one example of information stored in a storage unit 280.
Fig. 12 is a figure for explaining an acquisition sequence of attached memory information attached to memory information.
Fig. 13 is a figure for explaining an endocrine substance reflected when an event different from retrieve information or an event denying retrieve information occurs.
Fig. 14 shows selection permission information indicating retrieve information that is permitted to be selected as retrieve information.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

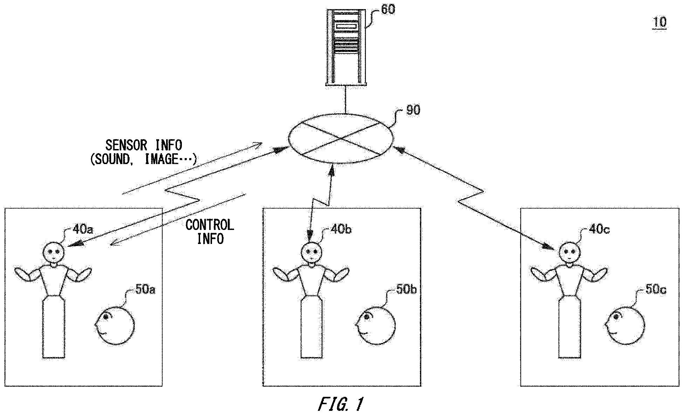

Fig. 1 schematically shows one example of an overall configuration of a system 10 according to the present embodiment. The system 10 includes a server 60, a robot 40a, a robot 40b and a robot 40c. Note that, the server 60 may function as a memory control system. Each of the robot 40a, robot 40b and robot 40c is one example of a target object in the memory control system.

The robot 40a, robot 40b and robot 40c are arranged at home, for example. A user 50a is a user of the robot 40a. The user 50a is a family member of the home at which the robot 40a is arranged or the user 50a is another person visiting the home. The robot 40a interacts with the user 50a through a conversation or the like. Likewise, each of the robot 40b and the robot 40c interacts with a corresponding one of a user 50b and a user 50c through a conversation or the like. Note that, the robot 40a, robot 40b and robot 40c can be applied to usage forms in which they are arranged at a reception desk of a shop or office or the like, and serves visiting customers, for example. Usage forms of the robot 40a, robot 40b and robot 40c are not limited to these usage forms.

The server 60 is provided remotely from the robot 40a, robot 40b and robot 40c. The server 60 can control the robot 40a, robot 40b and robot 40c through a communication network 90. For example, the server 60 acquires, through the communication network 90, sensor information detected at the robot 40a, decides an emotion of the robot 40a or operation that the robot 40a is caused to perform based on the acquired sensor information, and issues an instruction to the robot 40a by transmitting control information through the communication network 90.

Note that, the robot 40b and robot 40c have approximately the same functions as those of the robot 40a. In an explanation of the system 10, the robot 40a, robot 40b and robot 40c are collectively referred to as a robot 40 in some cases. In addition, in the system 10, processes of deciding an emotion of the robot 40 and operation thereof are executed by the server 60. However, processes of deciding the emotion of the robot 40 and operation thereof may be partially or entirely executed by the robot 40.

The robot 40 acquires various types of information detected by sensors such as information about sounds and images of a user 50 and external forces received by the robot 40, and transmits the information to the server 60. The server 60 uses a neural network (NN) to generate control information for controlling the robot 40 based on the information acquired from the robot 40.

Specifically, the server 60 recognizes the presence of the user 50a from sounds or images of the user 50a, and recognizes that the user 50a is "Boy A", then generates event information "Boy A is here." In addition, the server 60 generates event information such as "I've been stroked", from the external force information acquired from the robot 40. In addition, the server 60 generates input information to the neural network from the information acquired from the robot 40.

As influence information to influence decision of an emotion, the server 60 uses information corresponding to an amount of an endocrine substance in a living body to decide an emotion from the generated input information. For example, the server 60 uses a neural network that uses, as parameters, secretion amounts of endocrine substances such as an amount of dopamine, an amount of noradrenalin or an amount of serotonin to decide an emotion. In the neural network, an increase in an amount of dopamine influence generation of an emotion classified as "pleased". In addition, an increase in an amount of noradrenalin influence generation of an emotion classified as "anger". In addition, an increase in an amount of serotonin has an influence in a direction to suppress the intensity of an emotion such as "pleased" or "anger". A neural network determines what kind of emotion becomes easier to emerge, based on the total sum of the secretion amounts of these endocrine substances.

Here, when the total value of an amount of dopamine and an amount of noradrenalin exceeds the threshold, the server 60 determines that the intensity of an emotion has exceeded the threshold. In this case, the server 60 stores secretion information indicating the amount of the endocrine substance together with the memory information based on the information acquired from the robot 40. A predetermined type of information, such as event information "Boy A is here" or "I've been stroked" mentioned above, image or video information acquired from the robot 40, can be shown as examples of memory information.

Here, the server 60 assumes that an event information "Boy A is here" has been generated from the newly acquired information after storing the memory information. In this case, the server 60 compares the current secretion amount of the endocrine substance of the robot 40 with the secretion amount of the endocrine substance stored together with the memory information "Boy A is here" and "I've been stroked". If it is determined that the secretion amounts of the endocrine substances are similar, the server 60 selects the memory information "I've been stroked" stored together with the memory information "Boy A is here" as information to be retrieved.

After that, if the information "I've been stroked" is actually generated from the information newly acquired from the robot 40, the server 60 makes the process of the neural network reflect the secretion amount of the endocrine substance stored together with the memory information "Boy A is here" and "I've been stroked", and decides the emotion of the robot 40. Thereby, if the emotion "pleased" occurred when the robot 40 was stroked in the past, the emotion completely opposite to the emotion "pleased" that occurred in the past can be prevented from being strongly generated.

On the other hand, if the information "I've been stroked" is not generated from the information newly acquired from the robot 40, the server 60 makes the process of the neural network reflect a secretion amount contrary to the secretion amount of the endocrine substance stored together with the memory information "Boy A is here" and "I've been stroked", and decides the emotion of the robot 40. Thereby, for example, it becomes easier for an emotion different from "pleased" to be obtained. Thereby, for example, an emotion "unfortunate" can emerge.

In this manner, the system 10 can take impressive memory information acquired by the robot 40 in the past in consideration of the secretion amount of the endocrine substance. Because of this, the system 10 can take appropriate memory information according to the information acquired from the robot 40. In addition, memory information to be taken is not uniformly determined from the information acquired from the robot 40, a wide variety of emotions can be generated according to the information learned in the past and to the current situation.

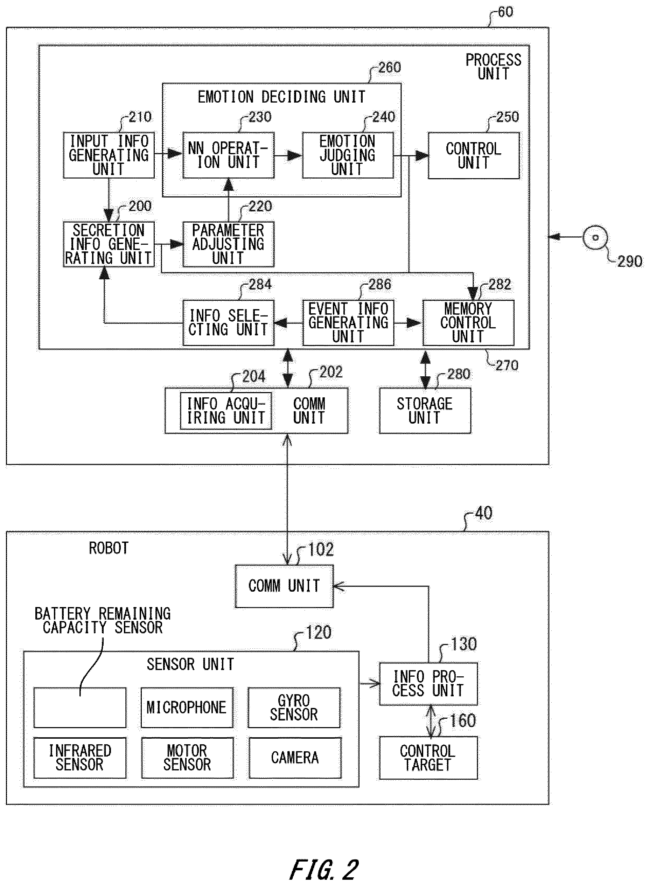

Fig. 2 schematically shows a functional block configuration of a robot 40 and a server 60. First, the functional block configuration of the robot 40 is explained. The robot 40 has a sensor unit 120, an information processing unit 130, a control target 160 and a communicating unit 102. The information processing unit 130 may be a processor such as an MPU. The communicating unit 102 is responsible for communication with the server 60. The communicating unit 102 may be a communication device such as a network IF.

The control target 160 includes a speaker. The control target 160 also includes motors to drive movable parts such as limbs or a head part of the robot 40, or the like.

The sensor unit 120 has various types of sensor such as a microphone, a gyro sensor, a motor sensor, a camera, a battery remaining capacity sensor or an infrared sensor. The microphone of the sensor unit 120 acquires ambient sound. For example, the microphone of the sensor unit 120 acquires sounds of the user 50. The camera of the sensor unit 120 captures images using visible light and generates image information about moving images or still images. The infrared sensor of the sensor unit 120 detects objects around it using infrared rays. The gyro sensor of the sensor unit 120 detects the angular velocities of the entire robot 40 and each unit of the robot 40. The motor sensor of the sensor unit 120 detects the rotation angles of drive axes of motors to drive movable parts of the robot 40. The battery remaining capacity sensor of the sensor unit 120 detects the remaining capacity of a battery provided to the robot 40.

The sensor unit 120 outputs, to the information processing unit 130, various types of sensor data such as sound data acquired by a microphone, images captured by the camera, angular velocities detected by the gyro sensor, rotation angles detected by the motor sensor, a remaining capacity detected by the battery remaining capacity sensor or object information detected by the infrared sensor. The information processing unit 130 supplies the communicating unit 102 with an acquired sensor signal, and causes it to transmit the sensor signal to the server 60. In addition, based on control information acquired from the server 60, the information processing unit 130 causes the robot 40 to utter through the speaker or causes limbs of the robot 40 to operate.

Next, the functional block configuration of the server 60 is explained. The server 60 has a processing unit 270, a communicating unit 202 and a storage unit 280. The processing unit 270 includes a secretion information generating unit 200, an input information generating unit 210, a parameter adjusting unit 220, an emotion deciding unit 260, a control unit 250, a information selecting unit 284, an event information generating unit 286 and a memory control unit 282. The emotion deciding unit 260 has an NN operation unit 230 and an emotion judging unit 240. The communicating unit 202 has an information acquiring unit 204.

The communicating unit 202 is responsible for communication with the robot 40. The communicating unit 202 may be a communication device such as a network IF. The storage unit 280 has a storage medium such as a hard disk drive or a flash memory. In addition, the storage unit 280 has a volatile storage device such as RAM. The storage unit 280 stores data required for execution of processes by the processing unit 270, or the like, beside program codes to be read out by the processing unit 270 at the time of execution and various types of transient data.

The information acquiring unit 204 acquires information for deciding an emotion of the robot 40. For example, the information acquiring unit 204 acquires, through the network 90, information detected at the sensor unit 120 of the robot 40. The event information generating unit 286 generates event information based on the information acquired by the information acquiring unit 204. For example, the event information generating unit 286 generates event information such as "Boy A is here" and "I've been stroked". The event information may be stored in the storage unit 280 as memory information.

The secretion information generating unit 200 generates secretion information indicating a secretion amount of an endocrine substance to influence decision of the emotion of the robot 40, based on the information acquired by the information acquiring unit 204. When the intensity of the emotion of the robot 40 decided based on the information acquired by the information acquiring unit 204 exceeds a predetermined value, the memory control unit 282, associates and stores the secretion information and memory information based on the information acquired by the information acquiring unit 204. Specifically, the memory control unit 282 makes the storage unit 280 store the secretion information and the memory information based on the information acquired by the information acquiring unit 204. The information selecting unit 284 selects memory information to be retrieved by the robot 40 from the memory information that has been stored in association with the secretion information, based on the secretion information.

When the intensity of the emotion of the robot 40 decided based on the first information acquired by the information acquiring unit 204 exceeds a predetermined value, the memory control unit 282 associates and stores the first memory information based on the first information, a set of a second memory information based on the second information acquired by the information acquiring unit 204 before the first information and the first memory information, and the secretion information. When the information acquiring unit 204 acquires new information conforming to the second memory information, on condition that the secretion information generated by the secretion information generating unit 200 conforms to the secretion information stored in association with a set of the second memory information and the first memory information, the information selecting unit 284 selects the first memory information and a set of the second memory information and the first memory information, as memory information to be retrieved by the robot 40. Thereby, memory control like so-called associative learning can be implemented.

When the first memory information is selected by the information selecting unit 284, on condition that the information acquiring unit 204 further acquires new information conforming to the first memory information, the memory control unit 282 associates and stores the secretion information with an increased secretion amount of an endocrine substance with an influence of suppressing undulation of the emotion, and a set of the second memory information and the first memory information. Thereby, the robot can be made accustomed to events that occur with high frequency.

When the first memory information is selected by the information selecting unit 284, on condition that the information acquiring unit 204 further acquires new information conforming to the first memory information, the secretion information generating unit 200 makes the secretion information that indicates a secretion amount of an endocrine substance at present reflect an secretion amount of an endocrine substance indicated by the secretion information stored in association with a set of the second memory information and the first memory information. Thereby, an emotion that is far from the emotion that occurred in the past can be prevented from emerging.

When the intensity of the emotion of the robot 40 decided based on the first information acquired by the information acquiring unit 204 exceeds a predetermined value, the memory control unit 282 associates and stores first memory information based on the first information, a set of each of any combination of a plurality of second memory information based on a plurality of the second information acquired by the information acquiring unit 204 before the first information and the first memory information, and the secretion information. When the information acquiring unit 204 acquires new information conforming to a first combination of a plurality of the second memory information, on condition that the secretion information generated by the secretion information generating unit 200 conforms to the secretion information stored in association with a set of the first combination of a plurality of the second memory information and the first memory information, the information selecting unit 284 selects the first memory information and a set of the first combination of a plurality of the second memory information and the first memory information, as memory information to be retrieved by the target object.

When the intensity of the emotion of the robot 40 decided based on the first information acquired by the information acquiring unit 204 exceeds a predetermined value, the memory control unit 282 associates and stores the first memory information, a set of each of any combination of a plurality of the second memory information and a sequence of the first memory information and third memory information based on third information acquired by the information acquiring unit 204 following the first information, and the secretion information. When the information acquiring unit 204 acquires new information conforming to the first combination of a plurality of the second memory information, on condition that the secretion information generated by the secretion information generating unit 200 conforms to the secretion information stored in association with a set of the first combination of a plurality of the second memory information and a sequence of the first memory information and the third memory information, the information selecting unit 284 selects the first memory information and a set of the first combination of a plurality of the second memory information and a sequence of the first memory information and the third memory information, as memory information to be retrieved by the robot 40.

The storage unit 280 stores one or more memory information that is(are) permitted to be selected as information to be retrieved by the robot 40, when, in association with one or more determination information, information conforming to the one or more determination information is acquired. And, when the information acquiring unit 204 acquires information conforming to the determination information stored in the storage unit 280 in association with a set of the second memory information and the first memory information, and information conforming to the second memory information within a predetermined length of time, the information selecting unit 284 selects the first memory information as memory information to be retrieved by the robot 40. Thereby, the robot can be prevented from operating based on the information that it learned in a completely different scene in the past.

When the first memory information is selected by the information selecting unit 284, when the information acquiring unit 204 acquires new information denying the first memory information, the secretion information generating unit 200 makes the secretion information stored in association with a set of the second memory information and third memory information based on the new information reflect an endocrine substance of a secretion amount with an influence contrary to an influence by an endocrine substance of a secretion amount indicated by the secretion information stored in association with a set of the second memory information and the first memory information. In this case, the secretion information generating unit 200 may make the secretion information indicating the secretion amount of the endocrine substance at present reflect the secretion information stored in association with a set of the second memory information and the third memory information. The secretion information reflects the endocrine substance of the secretion amount with the contrary influence. Thereby, when an event different from the retrieved memory information occurs, it is possible to generate emotions contrary to those in the case when an event that is the same as the retrieved memory information occurs.

The emotion deciding unit 260 decides the emotion of the robot 40 based on the secretion amount of the endocrine substance indicated by the secretion information, and the information acquire by the information acquiring unit 204. The emotion deciding unit 260 decides the emotion of the robot 40 by using a neural network that uses input information based on the information acquired by the information acquiring unit 204 as input. Specifically, the emotion is decided by the NN operation unit 230 performing operation of the neural network, by the emotion judging unit 240 judging the emotion based on the operation result of the neural network by the NN operation unit 230.

The parameter adjusting unit 220 adjusts operation parameters for deciding the emotion from the input information, based on the secretion amounts of the endocrine substances indicated by the secretion information generated by the secretion information generating unit 200. The emotion deciding unit 260 decides emotions from the input information by using the operation parameters. Here, a secretion amount of an endocrine substance indicated by the secretion information influences coupling coefficients of artificial synapses included in the neural network.

The neural network includes a plurality of emotion artificial neurons for which emotions are determined. The emotion deciding unit 260 decides a current emotion, based on current firing state of each of the plurality of emotion artificial neurons. For example, the emotion deciding unit 260 may decide, as the emotion of the robot 40, an emotion assigned to a fired emotion artificial neuron.

The control unit 250 controls the robot 40 according to an emotion decided by the emotion deciding unit 260. For example, if the emotion deciding unit 260 decides an emotion "pleased" as an emotion of the robot 40, the control unit 250 generates control information for causing the robot 40 to show a behavior expressing pleasure and causes the control information to be transmitted to the robot 40. In addition, the control unit 250 may generate control information for causing the speaker of the robot 40 to output cheerfully sounding sounds and cause the robot 40 to engage in a conversation with a user using the sounds.

The functions of each unit of the server 60 may be realized by computers. For example, the processing unit 270 may be realized by a processors such as an MPU or the like, and the storage unit 280 may be realized by a recording medium such as a non-volatile memory. The storage unit 280 may store a program that is executed by processors. By the processor executing the program, the secretion information generating unit 200, the input information generating unit 210, and the parameter adjusting unit 220, the emotion deciding unit 260 including the NN operation unit 230 and the emotion judging unit 240, the control unit 250, the memory control unit 282, the information selecting unit 284, and the event information generating unit 286 may be implemented, and control of the storage unit 280 may be realized. The program may be read out of a recording medium 290 such as an optical disc by the processor and stored in the storage unit 280, or may be provided to the server 60 through a network and stored in the storage unit 280. The storage unit 280 and recording medium 290 may be computer readable non-transitory recording media.

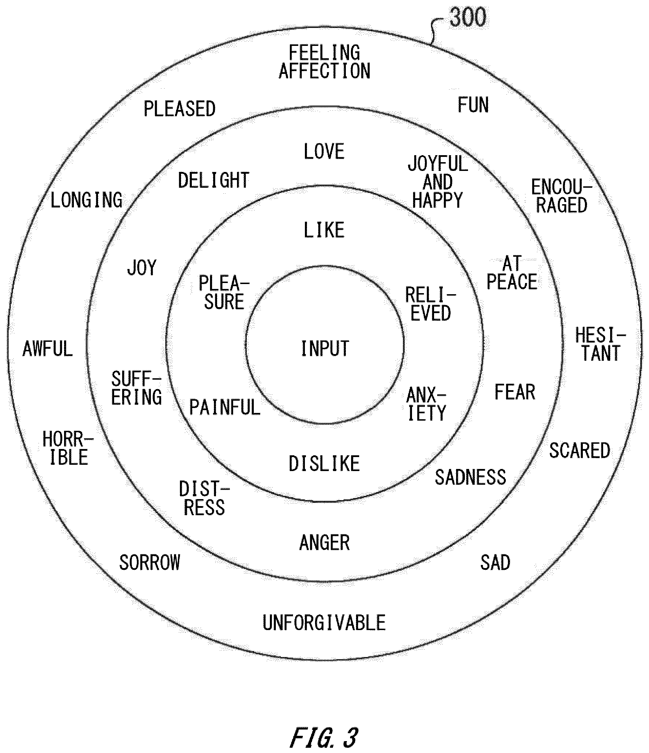

Fig. 3 schematically shows an emotion map 300. On the emotion map 300, emotions are arranged in concentric circles radially from their center. The closer an emotion is arranged to the center of the concentric circles, the more primitive the emotion is. At outer parts of the concentric circles, emotions representing states or behaviors that emerge from a mental state are arranged. Emotions represent the concept covering sentiments and psychological states. On the left side of the concentric circles, emotions generated as responses generally occurring in brains are arranged. On the right side of the concentric circles, generally, emotions induced by situational determinations are arranged.

The neural network which is a target of operation of the NN operation unit 230 includes artificial neurons which are assigned to the respective emotions shown on the emotion map 300. The neural network also has a plurality of artificial neurons for input assigned to, respectively, an input positioned at the innermost part of the concentric circles on the emotion map 300. The plurality of artificial neurons for input receive inputs of input information generated by the input information generating unit 210 based on the information acquired by the information acquiring unit 204. Then, artificial neurons are connected by artificial synapses generally from inner parts toward outer parts to form the neural network.

Based on the input information, the NN operation unit 230 performs operation of the neural network repeatedly, and decides the firing state of each artificial neuron. The emotion judging unit 240 judges the emotion of the robot 40 based on the firing states of each artificial neuron. For example, the emotion judging unit 240 judges an emotion to which a firing artificial neuron is assigned as one emotion felt by the robot 40.

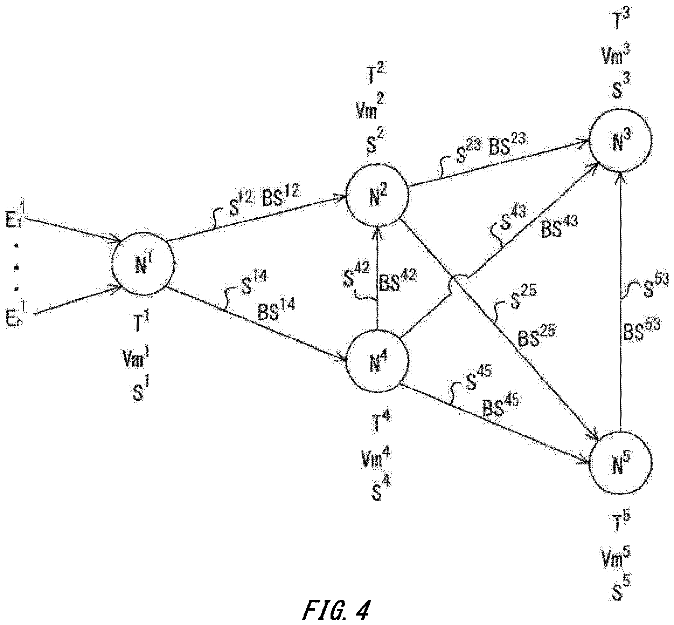

Fig. 4 schematically shows a part of a neural network used by a system 10. The illustrated part of the neural network includes artificial neurons N¹, N², N³, N⁴ and N⁵ and artificial synapses S¹², S¹⁴, S²³, S²⁵, S⁴², S⁴³, S⁴⁵ and S⁵³. Artificial neurons correspond to neurons in a living body. Artificial synapses correspond to synapses in a living body.

E¹ indicates input information based on the detection signal. The artificial neuron N¹ is an artificial neuron for input. The artificial neuron N¹ receives inputs of n input information E₁¹ to input information Eₙ¹ respectively generated based on detection signals from sensors.

The artificial synapse S¹² is an artificial synapse connecting the artificial neuron N¹ and the artificial neuron N². In particular, the artificial synapse S¹² is an artificial synapse for inputting an output from the artificial neuron N¹ to the artificial neuron N². The artificial synapse S¹⁴ is an artificial synapse connecting the artificial neuron N¹ and the artificial neuron N⁴. In particular, the artificial synapse S¹⁴ is an artificial synapse for inputting an output from the artificial neuron N¹ to the artificial neuron N⁴. Note that, assuming that j and k are integers, an artificial synapse for inputting an output from an artificial neuron N^{j} to an artificial neuron N^{k} is denoted as an artificial synapse S^{jk}.

Here, assuming that i is an integer, each artificial neuron is denoted with Nⁱ. Nⁱ has, as parameters, Sⁱ representing the status of Nⁱ, Vⁱm representing the internal state of an artificial neuron represented by Nⁱ, and Tⁱ representing a threshold of firing of Nⁱ. In addition, an artificial synapse S^{jk} has a coupling coefficient BS^{jk} as a parameter. Note that, in the present embodiment, artificial neurons are collectively referred to as an artificial neuron N in some cases, omitting their suffixes. In addition, an artificial synapse are collectively referred to as an artificial synapse S in some cases, omitting their suffixes. Likewise, parameters of artificial neurons are also collectively referred to as internal information Vm, a threshold T or a status S in some cases, omitting their suffixes.

The status S, internal state Vm, and threshold T of the artificial neuron N are parameters that can be updated over time. The status S is information related to the firing state of a neuron, and at least indicates whether the artificial neuron is in a firing state or non-firing state. The internal state Vm is information related to the membrane potential of a neuron, and is one example of parameters representing the internal state or output of the artificial neuron N.

In addition, a coupling coefficient BS, which is a parameter of the artificial synapse S, is a parameter that can be updated over time. The coupling coefficient BS is information related to the plasticity of a synapse, and indicates the strength of coupling between artificial neurons N coupled by the artificial synapse S.

The NN operation unit 230 updates the above-mentioned parameters in the neural network according to the input information, and calculates the internal state Vm of each artificial neuron N. Note that, in the present embodiment, the artificial neuron N gets to have the status S of being in a "firing" state if the internal state Vm exceeds the threshold T. If in the firing state, a predetermined signal is output from the artificial neuron N for predetermined length of time. After the passage of a predetermined length of time, the status S of N returns to "non-firing".

Here, contents of operation performed by the NN operation unit 230 are explained more specifically taking N² as an example. The NN operation unit 230 calculates an input I² to N² according to BS¹²×Vm¹×f(S¹)+BS⁴²×Vm⁴×f(S⁴). Here, f(S) is a function that gives 0 if S is a value representing non-firing, and gives 1 if S is a value indicating a rising phase or falling phase. Note that, f(s) corresponds to a model in which a synapse transmits an action potential only if a neuron fire. Note that, f(S) may be 1. This corresponds to a model in which a membrane potential is transmitted regardless of the firing state of a neuron. A function corresponding to another transmission model of membrane potentials may be applied as f(s).

Generally speaking, the NN operation unit 230 calculates an input Iⁱ to Nⁱ according to ∑ⱼBS^{ji}×Vm^{j}×f(S^{j})+∑ⱼEⱼⁱ. The NN operation unit 230 calculates Sⁱ and inputs Iⁱ to Nⁱ and the like being at the next clock time by using BS^{ji}, Vm^{j}, S^{j} and E^{j} at the current clock time to. The NN operation unit 230 repeats this temporally repetitively to decide the status S of each artificial neuron N in real-time. Then, the emotion judging unit 240 judges an emotion of the robot 40 based on the status S of each artificial neuron N. For example, if an artificial neuron to which an emotion "pleased" in Fig. 3 is assigned fires, the emotion judging unit 240 can judge that the robot 40 feels an emotion "pleased".

Here, the parameter adjusting unit 220 adjusts BS based on the information acquired from the robot 40. For example, if it is detected that the remaining capacity, which is the remaining amount of a storage battery provided to the robot 40, is 50% or lower, the secretion information generating unit 200 increases the secretion amount of "noradrenalin" as an internal variable. Then, the parameter adjusting unit 220 adjusts the coupling coefficient BS of the artificial synapse S associated with "noradrenalin" based on the secretion amount of "noradrenalin". As mentioned below, generation of "noradrenalin" is set to increase the coupling coefficient BS of the artificial synapse S on the path on which emotion artificial neurons corresponding to emotions such as "anxiety" or "anger" are fired, for example. Thereby, "noradrenalin" has an influence in the direction to make it easier for emotions such as "anxiety" or "anger" to be generated.

The secretion amounts of internal secreted substances are associated with the coupling coefficients BS of particular artificial synapses S. Thereby, according to information acquired at the robot 40, it is possible to change, through the secretion amounts of internal secreted substances, how easily signals are transmitted at artificial synapses S at respective locations in the neural network. Because of this, it becomes possible to generate variety of emotions from information acquired at the robot 40.

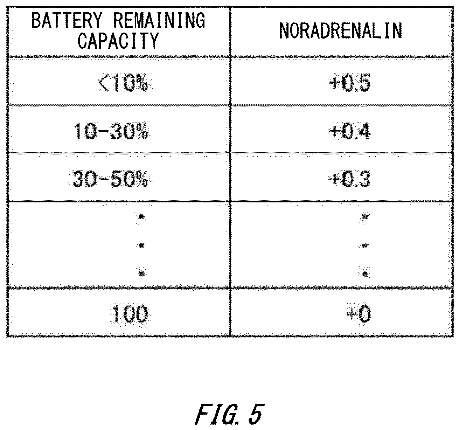

Fig. 5 is one example of correspondence information in which storage battery remaining capacities and endocrine substances are associated with each other. The storage unit 280 stores information indicating noradrenalin in association with a plurality of values about the remaining capacity of a storage battery. More specifically, the storage unit 280 stores information indicating amounts of increase in the secretion amount of noradrenalin in association with respective remaining capacities of the storage battery. Note that, the amounts of increase in the secretion amount are indicated as proportions, to the upper limit value of 1, of the secretion amount represented by an internal variable used by the NN operation unit 230. Thereby, as the remaining capacity of the storage battery decreases, the secretion amount of noradrenalin increases, and it becomes easier for emotions such as "anxiety" or "anger" to be generated.

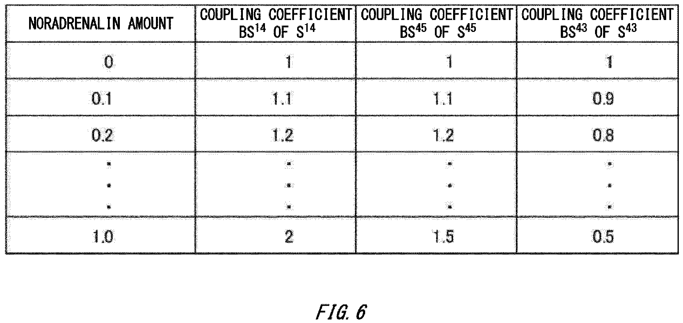

Fig. 6 is one example of coupling coefficient correspondence information in which secretion amounts of noradrenalin and coupling coefficients BS are associated with each other. The storage unit 280 stores information in which an increase factor of the coupling coefficient BS¹⁴ of the artificial synapse S¹⁴, an increase factor of the coupling coefficient BS⁴⁵ of the artificial synapse S⁴⁵ and an increase factor of the coupling coefficient BS⁴³ of the artificial synapse S⁴³ are associated with each other, in association with the total secretion amount of noradrenalin. Note that, the artificial synapse S taken here as an example is assumed to be connecting artificial neurons N with strong coupling.

As illustrated in the figure, values associated with the increase factor of BS¹⁴ and the increase factor of the BS⁴⁵ increase as the amount of noradrenalin increases. On the other hand, values associated with the increase factor of BS⁴³ decrease as the amount of noradrenalin increases. Thereby, for example, in the neural network shown in Fig. 4, it becomes easier for a signal generated based on input information to be transferred in the direction from N¹ to N⁵ than in the direction from N¹ to N³. Because of this, it becomes easier for artificial neurons arranged in the direction from N¹ to N⁵ to fire. Because of this, for example on the emotion map shown in Fig. 3, as noradrenalin increases, it becomes easier for emotions arranged in a particular direction relative to a center portion of the concentric circles, for example emotions "anxiety" and "scared", to fire. Because of this, it is possible to make it easier for emotions resembling emotions of humans that they feel when they are hungry to emerge in the robot 40.

Note that, here, in the example explained, the coupling coefficient BS of the artificial synapse S is adjusted in a direction to make it easier for an artificial neuron N at the output destination to fire. However, increase factors may be set such that the coupling coefficient BS of the artificial synapse S can be adjusted in a direction to make it harder for the artificial neuron N at the output destination to fire. For example, if an artificial synapse S is a strong coupling one, it is possible to make it harder for an artificial neuron N at the output destination to fire by making an increase factor smaller. On the other hand, if an artificial synapse S is connecting artificial neurons N with inhibitory coupling, it can be made harder for an artificial neuron N at the output destination to fire by making the increase factor larger, and it can be made easier for the artificial neuron N at the output destination to fire by making the increase factor smaller.

The parameter adjusting unit 220 refers to the coupling coefficient correspondence information to adjust a corresponding coupling coefficients BS by an amount corresponding to the total secretion amount of each internal secreted substance. Thereby, the adjusted amount of a coupling coefficient BS can be adjusted in a complicated manner based on information acquired at the robot 40, and eventually, emotion artificial neurons can be caused to fire in a variety of combinations. Moreover, by associating the relationship between information acquired at the robot 40 and endocrine substances with the relationship between each endocrine substance and a coupling coefficient BS while giving meaning to them as if the subject is a human, natural emotions which are usually felt by humans can be generated.

Note that, with reference to Fig. 5, a correspondence between the remaining capacity of a storage battery as information to be acquired from the robot 40 and noradrenalin was shown as an example. In addition, with reference to Fig. 6, a correspondence between noradrenalin and coupling coefficients BS was shown as an example. However, correspondences of these pieces of information are shown in order to explain influences of endocrine substances in a neural network in an easy-to-understand manner. It is needless to say that correspondences other than the correspondences explained with reference to Fig. 5 and Fig. 6 may be defined.

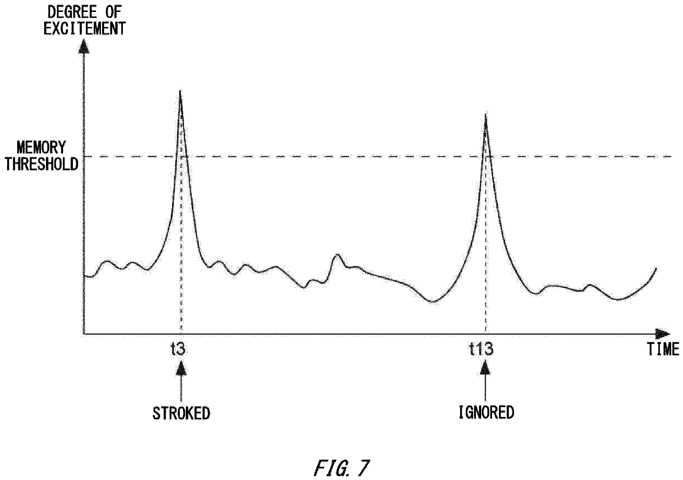

Fig. 7 schematically shows temporal changes in the degree of excitement in the robot 40. The emotion deciding unit 260 calculates for example the sum of the secretion amount of dopamine and the secretion amount of noradrenalin as the degree of excitement. Note that, the degree of excitement is one example of the intensity of the emotion of the robot 40. When the calculated degree of excitement exceeds the memory threshold, event information generated by the event information generating unit 286 at the corresponding timing is stored in the storage unit 280.

For example, as shown in Fig. 7, as a result of the NN operation unit 230 performing an operation based on the input information based on the information at the clock time t3, when the degree of excitement exceeds the memory threshold, event information "I've been stroked" generated from the information at the clock time t3 is stored in the storage unit 280. In addition, as a result of the NN operation unit 230 performing an operation based on the input information based on the information at the clock time t13, when the degree of excitement exceeds the memory threshold, event information "I've been ignored" generated from the information at the clock time t13 is stored in the storage unit 280.

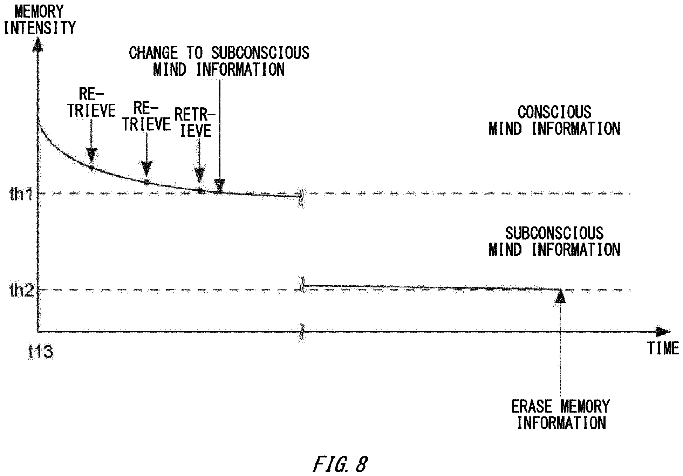

Fig. 8 schematically shows one example of temporal change in memory intensity of memory information stored in a storage unit 280. Here, memory information "I've been ignored" obtained from the information at the clock time t13 is explained. The memory intensity at the clock time t13 is the intensity according to the degree of excitement obtained from the input information based on the information at the clock time t13. The storage unit 280 stores the memory intensity in association with the memory information. Here, the storage unit 280 gradually decreases the memory intensity stored in association with the memory information according to the lapse of time. As shown in Fig. 8, the decrease rate in the memory intensity per time may decrease according to the lapse of time. Decrease in the memory intensity represents forgetting. A forgetting curve may be applied as a curve indicating the relationship between time and the memory intensity. On the other hand, the decrease rate in the memory intensity per time may constant regardless of time.

The memory information is stored in a manner according to the memory intensity. Specifically, memory information the memory intensity of which exceeds the memory level threshold th1 is stored as conscious mind information in the storage unit 280. The memory information stored as the conscious mind information in the storage unit 280 is voluntarily retrieved at a predetermined frequency. Specifically, the information selecting unit 284 selects the information "I've been ignored" as retrieve information at a predetermined frequency. In Fig. 8, it is retrieved three times.

Fig. 8 indicates a case where, when the memory information "I've been ignored" is retrieved, it is determined that a situation "I've been ignored" has not occurred from the information acquired from the robot 40. In this case, the memory intensity stored in the storage unit 280 is not increased, and gradually decreases over time.

Memory information the memory intensity of which is the memory level threshold th1 or lower and exceeds the memory level threshold th2 is stored as subconscious mind information in the storage unit 280. The memory information stored as the subconscious mind information in the storage unit 280 is not voluntarily retrieved. When the memory intensity is the memory level threshold th2 or lower, the memory information is erased from the storage unit 280.

In this manner, when memory information is retrieved and information conforming to the retrieved memory information has not been acquired from the robot 40, the memory intensity of the memory information gradually decreases. As a result, eventually, the memory information is erased from the storage unit 280. In this manner, memory information generated in a situation that does not occur frequently in the robot 40 is erased. Because of this, the memory area of the storage unit 280 can be effectively utilized.

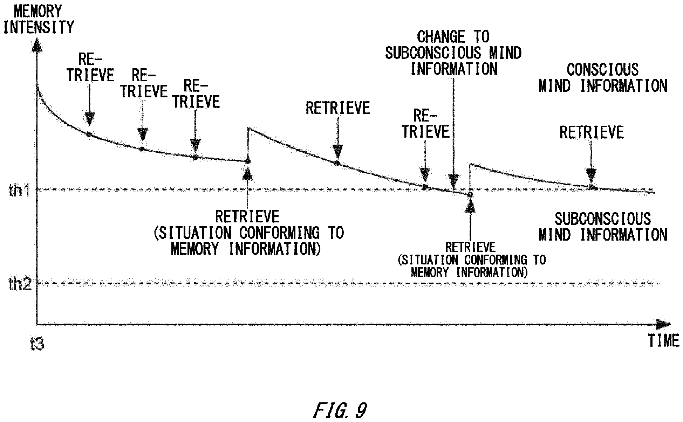

Fig. 9 schematically shows another example of temporal change in memory intensity of memory information stored in a storage unit 280. Here, memory information "I've been stroked" obtained from the information at the clock time t3 is explained. The memory intensity at the clock time t3 is the intensity according to the degree of excitement obtained from the input information based on the information at the clock time t3. As explained with reference to Fig. 8, the storage unit 280 gradually decreases the memory intensity stored in association with the memory information according to the lapse of time.

Fig. 9 indicates a case where, among four voluntary retrieves continuing from the clock time t3, when retrieve is performed for the fourth time, it is determined from the information acquired from the robot 40 that an event "I've been stroked" is occurring. For example, within a predetermined length of time after retrieving the memory information "I've been stroked" for the fourth time, it is determined that an event "I've been stroked" has occurred from the information acquired from the robot 40. In this case, the storage unit 280 increases the memory intensity to be stored in association with the memory information "I've been stroked" by a predetermined amount. Note that, this amount of increase of the memory intensity may be variable. In addition, after that, the storage unit 280 decreases the decrease rate of the memory intensity per time. As shown in Fig. 9, the decrease rate of the memory intensity per time from the time point of retrieving is smaller than the decrease rate of the memory intensity per time from the time point of storing at the clock time t3. In addition, the information selecting unit 284 decreases the frequency of retrieving the information "I've been stroked." Details of the parameters for decreasing the retrieve frequency will be mentioned below.

In Fig. 9, for the memory information "I've been stroked", after the fourth voluntary retrieve, after two voluntary retrieves are performed at low retrieve frequency, the memory information "I've been stroked" shifts to the subconscious mind information. After shifting to the subconscious mind information, when an event conforming to the event when the memory information "I've been stroked" is generated newly occurs, the memory information "I've been stroked" is retrieved even after it shifted to the subconscious mind information. For example, the memory information "I've been stroked" is associated with attached memory information "Boy A is here." Here, when information conforming the event "Boy A is here" is obtained from the robot 40, the memory information "I've been stroked" associated with the attached memory information "Boy A is here" may be retrieved. Note that, specific examples of this storing process and retrieving process will be mentioned below.

Fig. 9 indicates a case where, like the above-mentioned fourth voluntary retrieve, it is determined from the information acquired from the robot 40 that an event "I've been stroked" occurred. In this case, the storage unit 280 increase the memory intensity to be stored in association with the memory information "I've been stroked" by a predetermined amount. In addition, after that, the storage unit 280 decreases the decrease rate of the memory intensity per time. As shown in Fig. 9, the decrease rate of the memory intensity per time from the time point of retrieving this time is smaller than the decrease rate of the memory intensity per time from the time point of retrieving at a previous time. In this manner, every time the information is retrieved, the decrease rate of the memory intensity per time is made smaller, and the memory intensity decreases more gently. In addition, the information selecting unit 284 decreases the frequency of retrieving the information "I've been stroked." In this manner, when an event conforming to the memory information frequently occurs, the memory intensity is increased and the decrease rate of the memory intensity per time is made smaller, and the retrieve frequency of the memory information is decreased. Therefore, when an event conforming to the memory information frequently occurs, the memory information is stored as a more fixed, common memory. In this manner, the system 10 can store the memory information in such a way that the memory is fixed by repeatedly learning by humans.

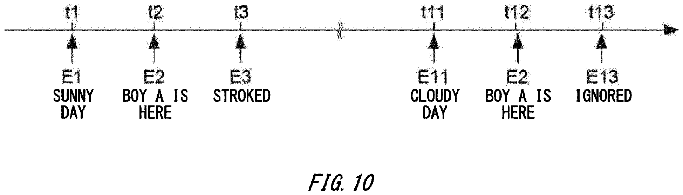

Fig. 10 is a figure for explaining an acquisition sequence of information acquired by the robot 40. As mentioned above, the memory information "I've been stroked" is event information generated based on the information at the clock time t3. Attached memory information "Sunny day" is generated from the information at the clock time t1, which is a predetermined length of time earlier than the clock time t3, and attached memory information "Boy A is here" is generated from the information at the clock time t2. Both attached information are stored in the storage unit 280 in association with the memory information "I've been stroked."

In addition, attached memory information "Cloudy day" is generated from the information at the clock time t11, which is a predetermined length of time earlier than the clock time t13, and attached memory information "Boy A is here" is generated from the information at the clock time t12. Both generated attached information are stored in the storage unit 280 in association with the memory information "I've been ignored."

Note that, in the following explanation, for the purpose of brief explanation, "I've been stroked" is represented by E3, "Sunny day" is represented by E1, and "Boy A is here" is represented by E2. In addition, "I've been ignored" is represented by E13, and "Cloudy day" is represented by E11.

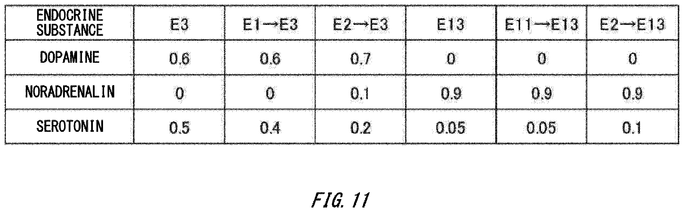

Fig. 11 shows one example of information stored in a storage unit 280. Each memory information, E3, E1→E3, E2→E3, E13, E11→E13, and E2→E13, is each stored in the storage unit 280 in association with secretion amounts of a plurality of endocrine substances. The secretion amount of the endocrine substance associated with the memory information indicates the intensity of evoking an emotion influenced by respective endocrine substances, when an event conforming to the memory information occurs.

For example, the secretion amount of dopamine indicates the intensity of evoking an emotion "pleased" when an event conforming to the memory information occurs. The secretion amount of noradrenalin indicates the intensity of evoking an emotion "anxiety" when an event conforming to the memory information occurs. In addition, the secretion amount of serotonin indicates the intensity of suppressing the undulation of emotions when an event conforming to the memory information occurs.

Note that, the secretion amount of serotonin indicates the degree of fixation of the corresponding memory information. For example, the greater the secretion amount of serotonin is, it is indicated that the memory is fixed more surely. Therefore, the greater the secretion amount of serotonin is, the lower the voluntary retrieve frequency is, the smaller the decrease rate of the memory intensity per unit time is. That is, the storage unit 280 decreases the decrease rate of the memory intensity per unit time of the memory information with the larger secretion amount of serotonin. In addition, the information selecting unit 284 selects the memory information stored in association with the larger secretion amount of serotonin in the storage unit 280 as retrieve information at a lower frequency. In addition, among the memory information stored in the storage unit 280, the information selecting unit 284 selects only the memory information of which the memory intensity exceeds the memory level threshold th1 as voluntary retrieve information.

As shown in Fig. 11, in the storage unit 280, 0.6 as the secretion amount of dopamine, 0 as the secretion amount of noradrenalin, and 0.5 as the secretion amount of serotonin are stored in association with the memory information E3. Therefore, it is meant that an event indicated by E3 occurs relatively frequently compared to the event corresponding to the other memory information. In addition, in the storage unit 280, 0 as the secretion amount of dopamine, 0.9 as the secretion amount of noradrenalin, and 0.05 as the secretion amount of serotonin are stored in association with the memory information E13. Therefore, when the memory information E13 is retrieved, and an event conforming to E13 actually occurs, it is meant that the emotion "anxiety" is largely evoked.

E1→E3 indicates that E3 occurs after E1 has occurred. Likewise, E2→E3 indicates that E3 occurs after E2 has occurred. According to the information shown in Fig. 11, it is indicated that the robot 40 is not accustomed to being stroked in a situation where A is with it, rather than being stroked on a sunny day, and the emotion "pleased" is evoked more largely when the robot 40 is stroked in a situation where A is with it.

E11→E13 indicates that E13 occurs after E11 has occurred. Likewise, E2→E13 indicates that E13 occurs after E2 has occurred. According to the secretion amounts of the endocrine substances shown in Fig. 11, the robot 40 is not accustomed to being ignored so much, and if an event of being ignored occurs when it retrieves being ignored, the emotion "anxiety" is evoked strongly.

Note that, not only the memory information E3 and E13, but also the memory information E1→E3, E2→E3, E11→E13, E2→E13 are retrieved at a frequency according to a corresponding secretion amount of serotonin. And, when a corresponding event occurs, the corresponding secretion amount of the endocrine substance is reflected in the calculation of the emotion of the robot 40 in the NN operation unit 230. For example, the explanation is made taking the memory information E1→E3 as an example. When the robot 40 is stroked on a sunny day, 0.6 as the secretion amount of dopamine, 0 as the secretion amount of noradrenalin, and 0.4 as the secretion amount of serotonin, are reflected in the current secretion amount of the endocrine substance. For example, the secretion amount of dopamine is adjusted to an average value between the current secretion amount of dopamine and 0.6, the secretion amount of noradrenalin is adjusted to an average value between the current secretion amount of noradrenalin and 0, and the secretion amount of serotonin is adjusted to an average value between the current secretion amount of serotonin and 0.4. Note that, the endocrine information reflected in the current secretion amount of the endocrine substance is not limited to the secretion amount of the endocrine substance associated with E1→E3. For example, 0.6 as the secretion amount of dopamine, 0 as the secretion amount of noradrenalin, and 0.5 as the secretion amount of serotonin which are associated with E3 may be reflected in the current secretion amount of the endocrine substance, where E3 is memory information later in chronological order in the memory information E1→E3. Otherwise, the secretion amount of the endocrine substance associated with E1 may be reflected in the current secretion amount of the endocrine substance, where E1 is memory information earlier in chronological order in the memory information E1→E3.

In addition, the memory information E3 may be selected as retrieve information, when an event conforming to the event E1 or E2 occurs, based on the memory information E1→E3 or E2→E3. For example, when an event conforming to the event E1 occurs, on condition that the degree of coincidence between the distribution of the current secretion amount of the endocrine substance and the distribution of the secretion amount of the endocrine substance associated with E1→E3 in the storage unit 280 exceeds a predetermined threshold, the information selecting unit 284 selects the memory information E3 as retrieve information. Note that for the degree of coincidence of the secretion amount of the endocrine substance, the shortness of the distance of a vector whose component is the secretion amount of each endocrine substance may be used as an index. For example, assuming that i is an identification symbol of an endocrine substance, qit is the current secretion amount of the endocrine substance, qic is the secretion amount of the endocrine substance associated with the memory information in the storage unit 280, the reciprocal of {∑ᵢ(qᵢₜ-q_{ic})²}^{1/2} may be used as the degree of coincidence between secretion amounts of the endocrine substances. Here, ∑ᵢ represents summing over i. Note that, when the memory information E3 is selected as retrieve information, when input information conforming to E3 is input, and an event conforming to an event which is the same as E3 or conforms to E3 occurs, among the secretion amount information associated with the memory information E1→E3, the secretion amount of serotonin is increased by a predetermined amount.

Likewise, the memory information E13 may be selected as retrieve information, when an event conforming to the event E11 or E2 occurs, based on the memory information E11→E13 or E2→E13. Note that, when an event conforming to the event E2 occurs, both of E3 and E13 can be selected as retrieve information. In this case, the information selecting unit 284 may select only one of E3 and E13 as the retrieve information. For example, the information selecting unit 284 may retrieve only the memory information associated with the distribution of the secretion amount of the endocrine substance, which is closer to the distribution of the current secretion amount of the endocrine substance. For example, the information selecting unit 284 may compare the degree of coincidence between the distribution of the secretion amount of the endocrine substance associated with E2→E3 and the distribution of the current secretion amount of the endocrine substance, and the degree of coincidence between the distribution of the secretion amount of the endocrine substance associated with E2→E13 and the distribution of the current secretion amount of the endocrine substance, and select only the memory information from which the higher degree of coincidence was obtained as retrieve information. Also in this case, when the degree of coincidence with the distribution of the secretion amount of the endocrine substance is smaller than a predetermined value, the information selecting unit 284 may not select the memory information as retrieve information.

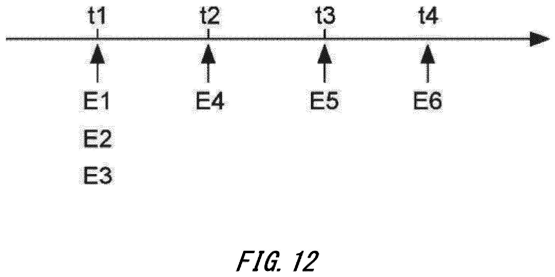

In Fig. 11, the explanation has been made taking one-to-one sets of memory information such as E1→E3, E2→E3, E11→E13, and E2→E13 as examples. However, the set of memory information may include two or more memory information as memory information earlier in chronological order. For example, in the acquisition sequence of the information shown in Fig. 12, when E4 occurs after E1, E2 and E3 occurred at the same time step, assuming that Ec is any combination of E1, E2 and E3, for each of Ec, the storage unit 280 may store the sets of memory information Ec→E4 in association with the secretion amount of the endocrine substance. Here, there are seven for Ec; [E1, E2, E3], [E1, E2], [E1, E3], [E2, E3], [E1], [E2], and [E3]. That is, seven sets of memory information; [E1, E2, E3]→E4, [E1, E2]→E4, [E1, E3]→E4, [E2, E3]→E4, [E1]→E4, [E2]→E4, [E3]→E4, are stored in association with the secretion amount of the endocrine substance. These respective sets of memory information Ec→E4 are retrieved at respectively predetermined time intervals. And, when an event conforming to E4 occurs following Ec, the memory intensity of the applicable Ec→E4 is increased. In addition, among the secretion amount information corresponding to the applicable Ec→E4, the secretion amount of serotonin is increased. Thereby, a set of memory information which occurs frequently becomes fixed memory information. On the other hand, a set of memory information which does not occur frequently shifts from the conscious mind information to the subconscious mind information relatively early. And, a set of memory information which rarely occurs is erased eventually as one that has been forgotten.

In addition, the set of memory information may include two or more memory information as memory information later in chronological order. For example, in the acquisition sequence of the information shown in Fig. 12, when events E5, E6 occurred in chronological order after E4, [E1, E2, E3]→[E4→E5→E6], [E1, E2]→[E4→E5→E6], [E1, E3]→[E4→E5→E6], [E2, E3]→[E4→E5→E6], [E1]→[E4→E5→E6], [E2]→[E4→E5→E6], [E3]→[E4→ E5→E6] may be stored in association with the secretion amount information, as sets of memory information. Here, retrieving process is explained taking a set of memory information [E1, E2, E3]→[E4→E5→E6] as an example. When events E1, E2 and E3 occur at the same time step, a sequence of memory information E4, E5 and E6 may be selected. That is, it is retrieved that events occur in the order of E4, E5 and E6, according to the events E1, E2 and E3. And, after events E1, E2 and E3 occurred at the same time step, when E4, E5 and E6 occur sequentially in this sequence, the memory intensity is increased. And, among the corresponding secretion amount information, the secretion amount of serotonin is increased. Note that, whether to conform to [E4→E5→E6] or not is determined true only when events occur in the sequence of E4, E5, E6. For example, when events occur in the sequence of E4, E6, E5, it is determined not to conform to [E4→E5→E6]. Thereby, a set of memory information with a sequence which does not occur frequently shifts to the subconscious mind information more early than a set of memory information with a sequence which occurs frequently. And, a set of memory information with a sequence which rarely occurs is erased eventually as one that has been forgotten. This can realize a storing process in consideration of the sequence property.

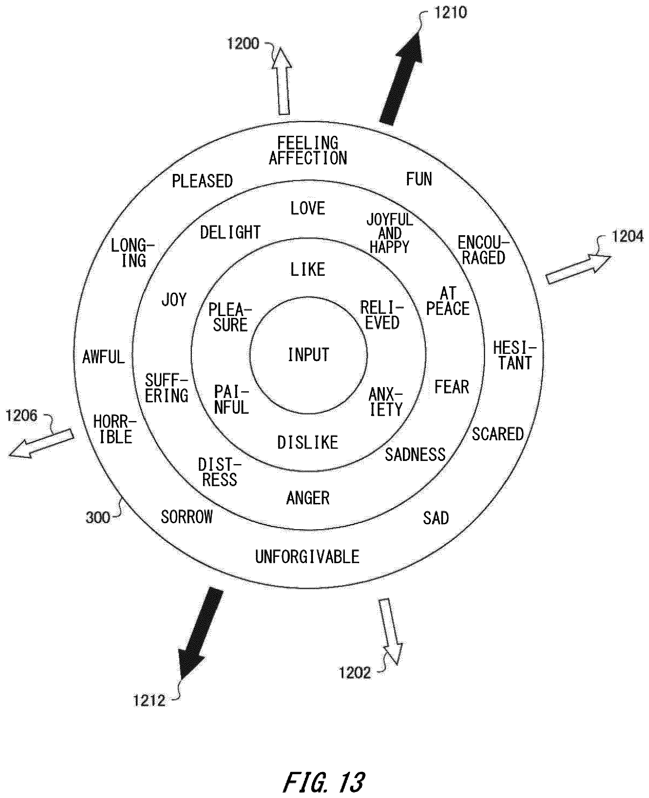

Fig. 13 is a figure for explaining an endocrine substance reflected when an event different from retrieve information or an event denying retrieve information occurs. A vector 1200 indicates a vector of an emotion caused by influences of dopamine on the emotion map 300. That is, it is indicated that, when input information is input to the input artificial neuron, by influences of dopamine, information transmission is promoted from the central input unit in the direction indicated by the vector 1200. Note that, the vector 1200 indicates the average direction of the path on which dopamine promotes the information transmission. It is not meant that dopamine promotes the information transmission only in the direction of the vector 1200.

A vector 1202 and a vector 1204 indicate, on the emotion map 300, representative directions of emotions that can be caused by influences of noradrenalin and serotonin, respectively. A vector 1210 indicates a representative direction emotions caused by influences of the endocrine substance of which the secretion amount is associated with E2→E3. The vector 1210 is obtained by weighting and adding the vector 1200, the vector 1202 and the vector 1204 according to the secretion amount associated with E2→E3. That is, when the memory information E3 is selected as retrieve information based on the memory information E2→E3, when an event which is the same as E3 or conforms to E3 occurs, the secretion amount of the endocrine substance in the direction indicated by the vector 1210 is reflected in the current secretion amount of the endocrine substance.

Here, a case where, when the memory information E3 is selected as retrieve information based on the memory information E2→E3, input information that denies E3 is input, and an event E4 that is different from E3 or denies E3 occurs from the input information, is explained. Note that, when E3 is "I've been stroked", the event E4 may be an event that is determined to be in a predetermined negative relationship, such as an event "I was not stroked" or an event "I was struck." In this case, the secretion information generating unit 200 makes the secretion amount of the endocrine substance associated with E2→E4 reflect the endocrine substance that influences the direction of the vector 1212 opposite to the vector 1210 and the secretion amount thereof. In addition, the secretion information generating unit 200 makes the current secretion amount of the endocrine substance reflect the secretion amount of the endocrine substance associated with E2→E4, the current secretion amount of the endocrine substance reflects the endocrine substance that influences the direction of the vector 1212 and the secretion amount thereof. For example, assuming that a vector 1206 in Fig. 13 is a representative direction of an emotion caused by influences of vasopressin, the secretion information generating unit 200 generates secretion information indicating 0.7 as the secretion amount of noradrenalin, and 0.3 as the secretion amount of vasopressin, and makes the current secretion amount of the endocrine substance reflect them. Thereby, when the retrieved event does not occur, it is possible to make it easier for an emotion in the direction contrary to the case where the retrieved event occurred on the emotion map 300 to be caused. This makes it possible to appropriately reflect the movement of an emotion expected when the retrieved event is missed in the robot 40.

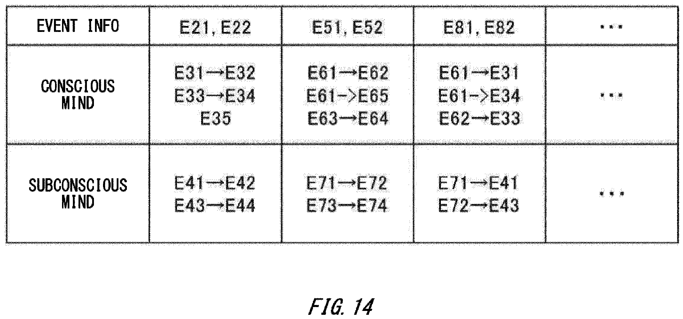

Fig. 14 shows selection permission information representing retrieve information that is permitted to be selected as retrieve information. The storage unit 280 stores, as the first selection permission information, E31→E32, E33→E34, and E35, which are stored as the conscious mind information, and E41→E42 and E43→E44, which are stored as the subconscious mind information, in association with the event information E21 and E22. In addition, the storage unit 280 stores, as the second selection permission information, E61→E62, E61→E65, and E63→E64, which are stored as the conscious mind information, and E71→E72 and E73→E74, which are stored as the subconscious mind information, in association with the event information E51 and E52. In addition, the storage unit 280 stores, as the third selection permission information, E61→E31, E61→E34, and E62→E33, which are stored as the conscious mind information, and E71→E41 and E72→E43, which are stored as the subconscious mind information, in association with the event information E81 and E82.

The first selection permission information indicates that, when the memory information E31→E32 is stored as the conscious mind information, when E31 occurs following E21 and E22, E32 is selectable as the retrieve information. Likewise, the first selection permission information indicates that, when the memory information E33→E34 is stored as the conscious mind information, and the memory information E41→E42 and E43→E44 are stored as the subconscious mind information, when E33 occurs following E21 and E22, E34 is selectable as the retrieve information, when E41 occurs following E21 and E22, E42 is selectable as the retrieve information, and when E43 occurs following E21 and E22, E44 is selectable as the retrieve information. In addition, the first selection permission information indicates that, when the memory information E35 is stored as the conscious mind information, when E21 and E22 occur, E35 is selectable as the retrieve information.

Likewise, the second selection permission information indicates that, when the memory information E61→E62 and E61→E65 is stored as the conscious mind information, when E61 occurs following E51 and E52, E62 or E65 is selectable as the retrieve information. Likewise, the second selection permission information indicates that, when the memory information E63→E64 is stored as the conscious mind information, and the memory information E71→E72 and E73→E74 is stored as the subconscious mind information, when E63 occurs following E51 and E52, E64 is selectable as the retrieve information, when E71 occurs following E51 and E52, E72 is selectable as the retrieve information, and when E73 occurs following E51 and E52, E74 is selectable as the retrieve information.

Note that, in the second selection permission information, the memory information E61→E62 and E61→E65 are stored as the conscious mind information. These sets of memory information have the same E61 as the memory information earlier in chronological order. In this case, among the memory information E61→E62 and E61→E65, the memory information to be preferentially selected as the retrieve information may be selected based on the current secretion amount of the endocrine substance or the secretion amount of the particular endocrine substance. For example, as mentioned above with reference to Fig. 11, each of the secretion amount of the endocrine substance associated with the memory information E61→E62 in the storage unit 280 and the secretion amount of the endocrine substance associated with the memory information E61→E65 in the storage unit 280 may be compared with the current secretion amount of the endocrine substance, and memory information with the highest degree of coincidence may be selected as retrieve information more preferentially. Here, as mentioned above, for the degree of coincidence of the secretion amount of the endocrine substance, the shortness of the distance of a vector whose component is the secretion amount of each endocrine substance may be used as an index. For example, if the degree of coincidence between the secretion amount of the endocrine substance associated with the memory information E61→E65 and the current secretion amount of the endocrine substance is higher than the degree of coincidence between the secretion amount of the endocrine substance associated with the memory information E61→E62 and the current secretion amount of the endocrine substance, the memory information E61→E65 and the memory information E65 may be selected as retrieve information.

Note that, from the memory information E61→E62 and E61→E65, when memory information to be selected preferentially as retrieve information is selected based on the secretion amount of the particular endocrine substance, a secretion amount of the secreted substance associated with the memory information selected by the user may be applied as the secretion amount of the particular endocrine substance. For example, a plurality of memory information are presented and a user is requested to reorder the plurality of memory information in a predetermined order. Specifically, a user is requested to reorder the plurality of memory information in descending order of the degree of joy. The secretion amount of the endocrine substance associated with the memory information highest in the order by the user may be applied as the secretion amount of the particular endocrine substance.

Likewise, the third selection permission information indicates that, when the memory information E61→E31 is stored as the conscious mind information, when E61 occurs following E81 and E82, E31 or E34 is selectable as the retrieve information. Likewise, the third selection permission information indicates that, when the memory information E62→E33 is stored as the conscious mind information, and the memory information E71→E41 and E72→E43 is stored as the subconscious mind information, when E62 occurs following E81 and E82, E33 is selectable as the retrieve information, when E71 occurs following E81 and E82, E41 is selectable as the retrieve information, and when E72 occurs following E81 and E82, E43 is selectable as the retrieve information. In the third selection permission information, the memory information E61→E31 and E61→E34 are stored as the conscious mind information. These sets of memory information have the same E61 as the memory information earlier in chronological order. In this case, among the memory information E61→E31 and E61→E34, the memory information to be preferentially selected as the retrieve information may be selected based on the current secretion amount of the endocrine substance or the secretion amount of the particular endocrine substance. Because a process similar to the selecting process of E61→E62 and E61→E65 in the second selection permission information can be applied to this selecting process, so the explanation is omitted.

Therefore, for example, when E31 occurs following E51 and E52, it is prohibited to select E32 as retrieve information. In addition, when E61 occurs following E51 and E52, E62 may be selected as retrieve information. On the other hand, when E61 occurs following E81 and E82, which are different from E51 and E52, E31 may be selected as retrieve information. In this manner, according to the sequence of events that occurred immediately before, the information that is permitted to be selected as retrieve information can be limited or switched. Thereby, for example, when the robot 40 is having fun playing Othello with a child, the robot 40 can be made to act based on the information that the robot 40 learned through Othello in the past. Because of this, for example, when the robot 40 is having fun playing Othello with a child, the robot 40 can be prevented from mistakenly taking behaviors that the robot 40 learned when it was playing Shogi (Japanese chess) with a father.

The functions of the server 60 that are explained above may be implemented by one or more computers. At least some functions of the server 60 may be implemented by virtual machines. In addition, at least some of the functions of the server 60 may be implemented by cloud computing. In addition, the robot 40 is one example of the target object. Various forms other than robots may be adopted as the form of target objects.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 ...system; 40 ...robot; 50 ...user; 90 ...network; 102 ...communicating unit; 120 ...sensor unit; 130 ...information processing unit; 160 ...control target; 120 ...sensor unit; 200 ...secretion information generating unit; 210 ...input information generating unit; 220 ...parameter adjusting unit; 230 ...NN operation unit; 240 ...emotion judging unit; 250 ...control unit; 260 ...emotion deciding unit; 270 ...processing unit; 280 ...storage unit; 282 ...memory control unit; 284 ...information selecting unit; 286 ...event information generating unit; 290 ...recording medium; 300 ...emotion map

## Claims

1. A memory control system comprising:
an information acquiring unit that acquires information for deciding an emotion of a target object;
a secretion information generating unit that generates secretion information indicating a secretion amount of an endocrine substance to influence decision of the emotion of the target object, based on the information acquired by the information acquiring unit;
when an intensity of the emotion of the target object decided based on the information acquired by the information acquiring unit exceeds a predetermined value, a memory control unit that associates and stores the secretion information and memory information based on the information acquired by the information acquiring unit; and
an information selecting unit that selects memory information to be retrieved by the target object from the memory information that has been stored in association with the secretion information, based on the secretion information.

2. The memory control system according to claim 1, wherein
when the intensity of the emotion of the target object decided based on a first information acquired by the information acquiring unit exceeds a predetermined value, the memory control unit associates and stores first memory information based on the first information, a set of second memory information based on a second information acquired by the information acquiring unit before the first information and the first memory information, and the secretion information; and
when the information acquiring unit acquires new information conforming to the second memory information, on condition that the secretion information generated by the secretion information generating unit conforms to the secretion information stored in association with a set of the second memory information and the first memory information, the information selecting unit selects the first memory information and a set of the second memory information and the first memory information as memory information to be retrieved by the target object.

3. The memory control system according to claim 2, wherein
when the first memory information is selected by the information selecting unit, on condition that the information acquiring unit further acquires new information conforming to the first memory information, the memory control unit associates and stores the secretion information with an increased secretion amount of an endocrine substance with an influence of suppressing undulation of the emotion, and a set of the second memory information and the first memory information.

4. The memory control system according to claim 2 or 3, wherein
when the first memory information is selected by the information selecting unit, on condition that the information acquiring unit further acquires new information conforming to the first memory information, the secretion information generating unit makes the secretion information that indicates a secretion amount of an endocrine substance at present reflect an secretion amount of an endocrine substance indicated by the secretion information stored in association with a set of the second memory information and the first memory information.

5. The memory control system according to claim 1, wherein
when the intensity of the emotion of the target object decided based on a first information acquired by the information acquiring unit exceeds a predetermined value, the memory control unit associates and stores first memory information based on the first information, a set of each of any combination of a plurality of second memory information based on a plurality of second information acquired by the information acquiring unit before the first information and the first memory information, and the secretion information;
when the information acquiring unit acquires new information conforming to a first combination of a plurality of the second memory information, on condition that the secretion information generated by the secretion information generating unit conforms to the secretion information stored in association with a set of the first combination of a plurality of the second memory information and the first memory information, the information selecting unit selects the first memory information and a set of the first combination of a plurality of the second memory information and the first memory information, as memory information to be retrieved by the target object.

6. The memory control system according to claim 5, wherein
when the intensity of the emotion of the target object decided based on the first information acquired by the information acquiring unit exceeds a predetermined value, the memory control unit associates and stores the first memory information, a set of each of any combination of a plurality of the second memory information and a sequence of the first memory information and third memory information based on third information acquired by the information acquiring unit following the first information, and the secretion information;
when the information acquiring unit acquires new information conforming to the first combination of a plurality of the second memory information, on condition that the secretion information generated by the secretion information generating unit conforms to the secretion information stored in association with a set of the first combination of a plurality of the second memory information and a sequence of the first memory information and the third memory information, the information selecting unit selects the first memory information and a set of the first combination of a plurality of the second memory information and a sequence of the first memory information and the third memory information, as memory information to be retrieved by the target object.

7. The memory control system according to any one of claims 2 to 4, further comprising:
a permission information storage unit that stores one or more memory information that is(are) permitted to be selected as information to be retrieved by the target object, when, in association with one or more determination information, information conforming to the one or more determination information is(are) acquired, wherein
when the information acquiring unit acquires information conforming to the determination information stored in the permission information storage unit in association with a set of the second memory information and the first memory information, and information conforming to the second memory information within a predetermined length of time, the information selecting unit selects the first memory information as memory information to be retrieved by the target object.

8. The memory control system according to any one of claims 2 to 4 and 6, wherein
when the first memory information is selected by the information selecting unit, when the information acquiring unit acquires new information denying the first memory information, the secretion information generating unit makes the secretion information stored in association with a set of the second memory information and third memory information based on the new information denying the first memory information reflect an endocrine substance of a secretion amount with an influence contrary to an influence by an endocrine substance of a secretion amount indicated by the secretion information stored in association with a set of the second memory information and the first memory information.

9. The memory control system according to claim 8, wherein
when the first memory information is selected by the information selecting unit, when the information acquiring unit acquires new information denying the first memory information, the secretion information generating unit makes the secretion information stored in association with a set of the second memory information and third memory information based on the new information denying the first memory information reflect an endocrine substance of a secretion amount with an influence contrary to an influence by an endocrine substance of a secretion amount indicated by the secretion information stored in association with a set of the second memory information and the first memory information, and makes the secretion information that indicates a secretion amount of an endocrine substance at present reflect the secretion information stored in association with a set of the second memory information and the third memory information, the secretion information reflects an endocrine substance of a secretion amount with the contrary influence.

10. The memory control system according to any one of claims 1 to 9, further comprising:
an emotion deciding unit that decides an emotion of the target object, based on a secretion amount of an endocrine substance indicated by the secretion information and the information acquired by the information acquiring unit.

11. The memory control system according to claim 10, wherein
the emotion deciding unit decides the emotion of the target object by using a neural network that uses input information based on the information acquired by the information acquiring unit as input.

12. The memory control system according to claim 11,
wherein a secretion amount of an endocrine substance indicated by the secretion information influences coupling coefficients of artificial synapses included in the neural network.

13. The memory control system according to claim 11 or 12, wherein
the neural network includes a plurality of emotion artificial neurons for which emotions are determined,
the emotion deciding unit decides a current emotion of the target object, based on current firing state of each of the plurality of emotion artificial neurons.

14. The memory control system according to any one of claims 1 to 13, further comprising:
a control unit that controls the target object, according to the emotion of the target object decided based on the information acquired by the information acquiring unit.

15. A system comprising:
the memory control system according to any one of claims 1 to 14, and
the target object.

16. A program for causing a computer to function as the memory control system according to any one of claims 1 to 14.
